# EUROPÄISCHE PATENTANMELDUNG

(11) **EP 3 479 936 A1**
(43) Veröffentlichungstag der Anmeldung: **08.05.2019**
(21) Anmeldenummer: 17199915.4
(22) Anmeldetag: 03.11.2017
(51) Int. Cl.: B23B 1/00

(54) **DREHEN VON WERKSTÜCKEN AUF EINER WERKZEUGMASCHINE**

(71) Anmelder: Siemens Aktiengesellschaft, 80333 München (DE)
(72) Erfinder: Bretschneider, Jochen, 73732 Esslingen (DE)

(57) **Zusammenfassung**

Eine Werkzeugmaschine weist zumindest einen Werkstücktisch (1), eine auf dem Werkstücktisch (1) angeordnete Werkstückaufnahme (2) und ein Werkzeug (5) auf. Der Werkstücktisch (1) ist lagegeregelt um eine Drehachse (7) drehbar, das Werkzeug (5) lagegeregelt zumindest parallel zur Drehachse (7) verfahrbar. In die Werkstückaufnahme (2) wird ein Werkstück (3) eingespannt. Der Werkstücktisch (1) wird über eine Vielzahl von vollständigen Umdrehungen um die Drehachse (7) gedreht. Während des Drehens des Werkstücktischs (1) um die Drehachse (7) wird das Werkzeug (5) zumindest temporär auf einer vom Werkstücktisch (1) im wesentlichen abgewandten Seite an das Werkstück (3) angestellt, so dass das Werkzeug (5) das Werkstück (3) spanabhebend bearbeitet. Während der gesamten spanabhebenden Bearbeitung des Werkstücks (3) durch das Werkzeug (5) befindet sich das Werkzeug (5) in einem Abstand (al) von der Drehachse (7), der stets mindestens so groß wie ein vorbestimmter Mindestabstand (amin1) ist.

## Beschreibung

Die vorliegende Erfindung geht aus von einem Betriebsverfahren für eine Werkzeugmaschine,
- wobei die Werkzeugmaschine zumindest einen Werkstücktisch, eine auf dem Werkstücktisch angeordnete erste Werkstückaufnahme und ein erstes Werkzeug aufweist,
- wobei der Werkstücktisch lagegeregelt um eine Drehachse drehbar ist und das erste Werkzeug lagegeregelt zumindest parallel zur Drehachse verfahrbar ist,
- wobei in die erste Werkstückaufnahme ein erstes Werkstück eingespannt wird,
- wobei der Werkstücktisch über eine Vielzahl von vollständigen Umdrehungen um die Drehachse gedreht wird,
- wobei während des Drehens des Werkstücktischs um die Drehachse das erste Werkzeug zumindest temporär auf einer vom Werkstücktisch im Wesentlichen abgewandten Seite an das erste Werkstück angestellt wird, so dass das erste Werkzeug das erste Werkstück spanabhebend bearbeitet.

Die vorliegende Erfindung geht weiterhin aus von einem Computerprogramm, das Maschinencode umfasst, der von einer Steuereinrichtung einer Werkzeugmaschine unmittelbar abarbeitbar ist, wobei die Abarbeitung des Maschinencodes durch die Steuereinrichtung bewirkt, dass die Steuereinrichtung eine Werkzeugmaschine, die zumindest einen lagegeregelt um eine Drehachse drehbaren Werkstücktisch, eine auf dem Werkstücktisch angeordnete erste Werkstückaufnahme und ein lagegeregelt zumindest parallel zur Drehachse verfahrbares erstes Werkzeug aufweist, derart betreibt,
- dass der Werkstücktisch über eine Vielzahl von vollständigen Umdrehungen um die Drehachse gedreht wird und
- dass während des Drehens des Werkstücktischs um die Drehachse das erste Werkzeug zumindest temporär auf einer vom Werkstücktisch im wesentlichen abgewandten Seite an ein in die erste Werkstückaufnahme eingespanntes erstes Werkstück angestellt wird, so dass das erste Werkzeug das erste Werkstück spanabhebend bearbeitet.

Die vorliegende Erfindung geht weiterhin aus von einer Steuereinrichtung einer Werkzeugmaschine, wobei die Steuereinrichtung mit einem Computerprogramm programmiert ist, so dass sie die Werkzeugmaschine entsprechend den obenstehend angegebenen Maßnahmen betreibt.

Die vorliegende Erfindung geht weiterhin aus von einer Werkzeugmaschine,
- wobei die Werkzeugmaschine zumindest einen Werkstücktisch, eine auf dem Werkstücktisch angeordnete erste Werkstückaufnahme und ein erstes Werkzeug aufweist,
- wobei der Werkstücktisch lagegeregelt über eine Vielzahl von vollständigen Umdrehungen um eine Drehachse drehbar ist und das erste Werkzeug lagegeregelt zumindest parallel zur Drehachse verfahrbar ist,
- wobei die Werkzeugmaschine eine derartige Steuereinrichtung aufweist.

Bei der Bearbeitung metallischer Werkstücke wird das Werkstück in der Regel auf einem Werkstücktisch in eine Werkstückaufnahme eingespannt und dann mittels spanabhebender Werkzeuge bearbeitet. Zur Bearbeitung des Werkstücks wird das Werkzeug lagegeregelt relativ zum Werkstück verfahren. Die spanabhebende Bearbeitung kann beispielsweise ein Fräsen sein. Diese Art der Bearbeitung ist besonders flexibel.

Die Bearbeitung durch Fräsen ist zwar sehr flexibel, benötigt bei manchen Werkstücken jedoch erhebliche Zeit. In vielen Fällen ist dies unumgänglich. In anderen Fällen kann die Bearbeitungszeit deutlich verkürzt werden, wenn das Werkstück nicht durch Fräsen, sondern durch Drehen bearbeitet wird. Beim Drehen wird das Werkstück um eine Achse rotiert und das Werkzeug an das Werkstück angestellt. Dadurch werden in der Regel rotationssymmetrische Teile hergestellt.

Meist erfolgt das Anstellen des Werkzeugs an das Werkstück auf einer Drehbank aus radialer Richtung. In jüngerer Zeit wird die Bearbeitung durch Drehen aber auch auf üblichen Werkzeugmaschinen angewendet. In diesem Fall wird das Werkzeug zur Bearbeitung der vom Werkstücktisch abgewandten Seite des Werkstücks verwendet, also zur Bearbeitung der Stirnseite des Werkstücks (sogenannte Stirnflächenbearbeitung). Zu diesem Zweck wird das Werkstück auf dem Werkstücktisch in eine Werkstückaufnahme eingespannt. Der Werkstücktisch - der meist als Rundtisch ausgebildet ist - wird schnell gedreht. Während des Drehens des Werkstücktischs um die Drehachse wird das erste Werkzeug parallel zur Drehachse an das Werkstück angestellt, so dass das erste Werkzeug das erste Werkstück spanabhebend bearbeitet. Dadurch lassen sich gegenüber einem herkömmlichen Fräsen erhebliche Produktivitätssteigerungen erzielen. Dies gilt ganz besonders, wenn ein flaches Profil bearbeitet werden soll.

Die Aufgabe der vorliegenden Erfindung besteht darin, Möglichkeiten zu schaffen, mittels derer derartige Bearbeitungsvorgänge so optimiert werden können, dass sie maximale Produktivität und eine technologisch optimale Bearbeitung miteinander vereinen.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet, dass das erste Werkzeug sich während der gesamten spanabhebenden Bearbeitung des ersten Werkstücks durch das erste Werkzeug in einem ersten Abstand von der Drehachse befindet, der stets mindestens so groß wie ein vorbestimmter erster Mindestabstand ist.

Dadurch ist es möglich, dass trotz der praktisch immer bestehenden Begrenzung der Drehzahl des Werkstücktischs die Geschwindigkeit des ersten Werkzeugs relativ zum Werkstück jederzeit oberhalb eines Minimalwertes gehalten werden kann, wobei der Minimalwert durch das Produkt des ersten Mindestabstands und die maximale Drehzahl des Werkstücktischs bestimmt ist. Dadurch kann zum einen eine technologisch optimale Bearbeitung gewährleistet werden. Weiterhin ist durch die Gewährleistung einer Mindestgeschwindigkeit auch eine Produktivitätssteigerung erzielbar.

Um das gewünschte Ziel - eine Einhaltung des ersten Mindestabstands - zu erreichen, sind verschiedene Vorgehensweisen möglich. In manchen Fällen weist das erste Werkstück einen Werkstückbereich auf, in dem keine Bearbeitung durch das erste Werkzeug erfolgen soll. In diesem Fall ist es möglich, dass das erste Werkstück in der ersten Werkstückaufnahme derart eingespannt ist, dass der Werkstückbereich einen Punkt enthält, der sich auf der Drehachse befindet. Wenn der Werkstückbereich hinreichend groß ist, ist es in diesem Fall möglich, dass das erste Werkstück während der gesamten spanabhebenden Bearbeitung des ersten Werkstücks durch das erste Werkzeug auf dem Werkstücktisch unbeweglich stets an derselben Position gehalten wird. Der Begriff "unbeweglich" bezieht sich auf die Position auf dem Werkstücktisch. Diese Vorgehensweise weist den Vorteil auf, dass das erste Werkstück zwar in der Regel nicht exakt mittig, oftmals aber - bezogen auf die Drehachse des Werkstücktischs - zumindest im Wesentlichen mittig in die erste Werkstückaufnahme eingespannt werden kann.

Eine alternative Möglichkeit besteht darin, dass das erste Werkstück in der ersten Werkstückaufnahme auf dem Werkstücktisch derart angeordnet ist, dass es sich ausschließlich an Orten befindet, die von der Drehachse mindestens um den ersten Mindestabstand beabstandet sind. In diesem Fall wird also das erste Werkstück - bezogen auf die Drehachse des Werkstücktisch - deutlich außermittig in die erste Werkstückaufnahme eingespannt. Auch in diesem Fall kann das erste Werkstück während der gesamten spanabhebenden Bearbeitung des ersten Werkstücks durch das erste Werkzeug auf dem Werkstücktisch unbeweglich stets an derselben Position gehalten werden.

In den Fällen, in denen das erste Werkstück während der spanabhebenden Bearbeitung auf dem Werkstücktisch unbeweglich stets an derselben Position gehalten wird, muss es möglich sein, das Werkzeug orthogonal zur Drehachse gesehen (also in Radialrichtung) zu positionieren.

Eine weitere Möglichkeit besteht darin, dass die erste Werkstückaufnahme - und mit ihr das erste Werkstück - auf dem Werkstücktisch während der spanabhebenden Bearbeitung des ersten Werkstücks durch das erste Werkzeug lagegeregelt verschoben wird und dass eine Richtung, in welche die Verschiebung erfolgt, eine Komponente orthogonal zur Drehachse aufweist. Dadurch können Bereiche des ersten Werkstücks, die sich zunächst in unmittelbarer Nähe der Drehachse befinden (deren Abstand also zunächst kleiner als der erste Mindestabstand ist), nach radial außen verlagert werden, so dass sie nach dem Verlagern nach radial außen einen Abstand von der Drehachse aufweisen, der mindestens so groß wie der vorbestimmte erste Mindestabstand ist.

Wenn die erste Werkstückaufnahme auf dem Werkstücktisch während der spanabhebenden Bearbeitung des ersten Werkstücks durch das erste Werkzeug lagegeregelt orthogonal zur Drehachse verschoben wird, ist es ebenfalls möglich, das Werkzeug orthogonal zur Drehachse gesehen (also in Radialrichtung) zu positionieren. Je nach Ausmaß, in dem ein orthogonales Verschieben der ersten Werkstückaufnahme möglich ist, kann dies sogar zwingend erforderlich sein. Bei einem hinreichend großen Ausmaß der möglichen Verschiebung der ersten Werkstückaufnahme ist es jedoch alternativ möglich, dass das erste Werkzeug während der gesamten spanabhebenden Bearbeitung des ersten Werkstücks durch das erste Werkzeug orthogonal zur Drehachse gesehen stets an derselben Position gehalten wird. Diese Vorgehensweise ermöglicht insbesondere, den Werkstücktisch mit konstanter Drehzahl zu betreiben und dadurch auch die Relativgeschwindigkeit zwischen Werkstück und Werkzeug konstant zu halten. Der Abstand des ersten Werkzeugs von der Drehachse und die Drehzahl des Werkstücktischs können dadurch auf einfache Weise so aufeinander abgestimmt sein, dass sich eine aus technologischer Sicht optimale Bearbeitung des ersten Werkstücks durch das erste Werkzeug ergibt.

In einer besonders bevorzugten Ausgestaltung der vorliegenden Erfindung ist vorgesehen,
- dass zusätzlich ein zweites Werkstück in eine auf dem Werkstücktisch angeordnete zweite Werkstückaufnahme eingespannt wird und
- dass das erste Werkzeug während des Drehens des Werkstücktischs um die Drehachse zumindest temporär auf einer vom Werkstücktisch im wesentlichen abgewandten Seite auch an das zweite Werkstück angestellt wird, so dass das erste Werkzeug auch das zweite Werkstück spanabhebend bearbeitet.

Durch diese Vorgehensweise lassen sich verschiedene Vorteile erreichen. Zunächst können, bezogen auf den Werkzeugtisch, Unwuchten, die bei nur einem einzelnen, exzentrisch angeordneten Werkstück zwangsweise auftreten würden, vermieden oder zumindest deutlich reduziert werden. Weiterhin lässt sich - bezogen auf eine einzelne Umdrehung des Werkstücktisches - der Anteil an Zeiten, während derer durch das erste Werkzeug keine Bearbeitung eines Werkstücks erfolgt, minimieren. Die Produktivität wird daher gesteigert. In vielen Fällen ergibt sich dadurch zusätzlich auch eine verbesserte Nutzung des Werkstücktischs. Weil in diesem Fall die Werkstücke in einem relativ großen Abstand von der Drehachse angeordnet werden, vereinfacht diese Ausgestaltung oftmals auch, mittels relativ geringer Drehzahlen des Werkstücktischs eine hohe Geschwindigkeit zwischen dem ersten Werkzeug und den Werkstücken zu erreichen.

Im einfachsten Fall sind das erste und das zweite Werkstück gleichartig zueinander und werden weiterhin das erste und das zweite Werkstück durch das erste Werkzeug in gleichartiger Weise bearbeitet. Dies ist jedoch nicht zwingend erforderlich. Vielmehr ist es alternativ möglich, dass das erste und das zweite Werkstück durch das erste Werkzeug in voneinander verschiedener Weise bearbeitet werden.

In einer weiteren ebenfalls besonders bevorzugten Ausgestaltung der vorliegenden Erfindung ist vorgesehen,
- dass die Werkzeugmaschine zusätzlich ein zweites Werkzeug aufweist,
- dass das zweite Werkzeug lagegeregelt zumindest parallel zur Drehachse verfahrbar ist,
- dass während des Drehens des Werkstücktischs um die Drehachse das zweite Werkzeug zumindest temporär auf der vom Werkstücktisch im wesentlichen abgewandten Seite an das erste Werkstück angestellt wird, so dass das zweite Werkzeug das erste Werkstück spanabhebend bearbeitet, und
- dass das zweite Werkzeug sich während der gesamten spanabhebenden Bearbeitung des ersten Werkstücks durch das zweite Werkzeug in einem zweiten Abstand von der Drehachse befindet, der stets mindestens so groß wie ein vorbestimmter zweiter Mindestabstand ist.

Durch diese Vorgehensweise lässt sich insbesondere auf einfache Weise die Produktivität steigern.

Im einfachsten Fall nehmen das erste und das zweite Werkzeug gleichartige Bearbeitungen des ersten Werkstücks vor. Dies ist jedoch nicht zwingend erforderlich. Vielmehr ist es alternativ möglich, dass das erste und das zweite Werkzeug voneinander verschiedene Bearbeitungen des ersten Werkstücks vornehmen. Beispielsweise kann das erste Werkzeug eine Bearbeitung ähnlich einem Schruppen und das zweite Werkzeug eine Bearbeitung ähnlich einem Schlichten des Werkstücks vornehmen.

Die Bearbeitung durch mehrere Werkzeuge wird besonders vorteilhaft mit der Bearbeitung mehrerer Werkstücke kombiniert.

Dadurch lassen sich insbesondere einseitige Belastungen des Werkstücktisches vermeiden, da die Kräfte, mit denen die Werkzeuge an die Werkstücke angedrückt werden, bezüglich der Drehachse des Werkstücktischs sich gegenseitig ausgleichende Hebelmomente bewirken können.

Die Aufgabe wird weiterhin durch ein Computerprogramm mit den Merkmalen des Anspruchs 11 gelöst. Eine vorteilhafte Ausgestaltungen des Computerprogramms ist Gegenstand des abhängigen Anspruchs 12.

Erfindungsgemäß bewirkt die Abarbeitung des Maschinencodes durch die Steuereinrichtung, dass die Steuereinrichtung die Werkzeugmaschine derart betreibt, dass das erste Werkzeug sich während der gesamten spanabhebenden Bearbeitung des ersten Werkstücks durch das erste Werkzeug in einem ersten Abstand von der Drehachse befindet, der stets mindestens so groß wie ein vorbestimmter erster Mindestabstand ist.

Die Abarbeitung des Maschinencodes durch die Steuereinrichtung bewirkt also im Wesentlichen, dass die Steuereinrichtung im Betrieb die Werkzeugmaschine gemäß einem erfindungsgemäßen Betriebsverfahren betreibt.

Vorzugsweise bewirkt die Abarbeitung des Maschinencodes durch die Steuereinrichtung weiterhin, dass die Steuereinrichtung die Werkzeugmaschine derart betreibt, dass
- während der spanabhebenden Bearbeitung des ersten Werkstücks durch das erste Werkzeug das erste Werkstück auf dem Werkstücktisch unbeweglich stets an derselben Position gehalten wird oder die erste Werkstückaufnahme auf dem Werkstücktisch lagegeregelt orthogonal zur Drehachse verschoben wird,
- während der spanabhebenden Bearbeitung des ersten Werkstücks durch das erste Werkzeug das erste Werkzeug orthogonal zur Drehachse gesehen stets an derselben Position gehalten wird oder das erste Werkzeug lagegeregelt orthogonal zur Drehachse verfahren wird,
- während des Drehens des Werkstücktischs um die Drehachse das erste Werkzeug zumindest temporär auf einer vom Werkstücktisch im wesentlichen abgewandten Seite auch an ein in eine auf dem Werkstücktisch angeordnete zweite Werkstückaufnahme eingespanntes zweites Werkstück angestellt wird, so dass das erste Werkzeug auch das zweite Werkstück spanabhebend bearbeitet, und/oder
- während des Drehens des Werkstücktischs um die Drehachse ein lagegeregelt parallel zur Drehachse verfahrbares zweites Werkzeug zumindest temporär auf der vom Werkstücktisch im wesentlichen abgewandten Seite an das erste Werkstück angestellt wird, so dass das zweite Werkzeug das erste Werkstück spanabhebend bearbeitet, wobei das zweite Werkzeug sich während der gesamten spanabhebenden Bearbeitung des ersten Werkstücks durch das zweite Werkzeug in einem zweiten Abstand von der Drehachse befindet, der stets mindestens so groß wie ein vorbestimmter zweiter Mindestabstand ist.

Die vorteilhaften Ausgestaltungen bestehen also im Wesentlichen darin, dass die Steuereinrichtung im Betrieb die Werkzeugmaschine gemäß einer der vorteilhaften Ausgestaltungen des erfindungsgemäßen Betriebsverfahrens betreibt.

Die Aufgabe wird weiterhin durch eine Steuereinrichtung mit den Merkmalen des Anspruchs 13 gelöst. Erfindungsgemäß ist die Steuereinrichtung mit einem erfindungsgemäßen Computerprogramm programmiert, so dass sie die Werkzeugmaschine entsprechend den erfindungsgemäßen Maßnahmen betreibt.

Die Aufgabe wird weiterhin durch eine Werkzeugmaschine mit den Merkmalen des Anspruchs 14 gelöst. Erfindungsgemäß ist die Steuereinrichtung der Werkzeugmaschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine,
- FIG 2: ein Ablaufdiagramm,
- FIG 3: eine Draufsicht auf einen Werkstücktisch,
- FIG 4: eine Draufsicht auf einen Werkstücktisch einschließlich Werkstück,
- FIG 5: eine Draufsicht auf einen Werkstücktisch einschließlich mehrerer Werkstücke,
- FIG 6: eine Draufsicht auf einen Werkstücktisch einschließlich mehrerer Werkstücke und
- FIG 7: eine Seitenansicht eines Werkstücktischs.

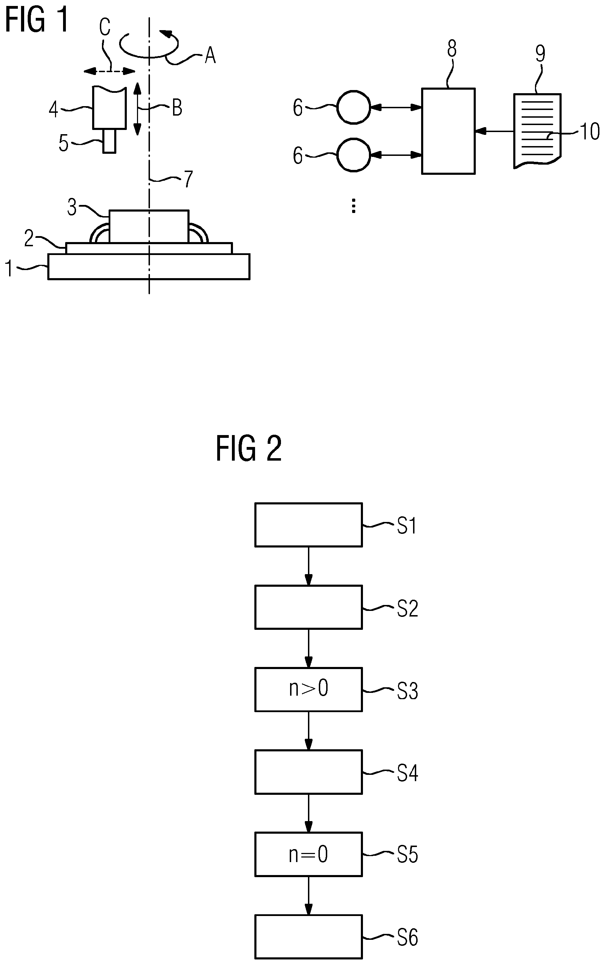

Gemäß FIG 1 weist eine Werkzeugmaschine einen Werkstücktisch 1 auf. Auf dem Werkstücktisch 1 ist eine Werkstückaufnahme 2 angeordnet. Die Werkstückaufnahme 2 wird nachfolgend als erste Werkstückaufnahme bezeichnet, da bei manchen Ausgestaltungen der vorliegenden Erfindung mehrere Werkstückaufnahmen vorhanden sind. In die erste Werkstückaufnahme 2 kann ein Werkstück 3 eingespannt werden. Das Werkstück 3 wird nachfolgend als erstes Werkstück bezeichnet.

Die Werkzeugmaschine weist weiterhin einen Werkzeughalter 4 auf. Der Werkzeughalter 4 wird nachfolgend als erster Werkzeughalter bezeichnet, da bei manchen Ausgestaltungen der vorliegenden Erfindung mehrere Werkzeughalter vorhanden sind. In den ersten Werkzeughalter 4 kann ein Werkzeug 5 eingespannt werden. Das Werkzeug 5 wird nachfolgend als erstes Werkzeug bezeichnet. Im Rahmen der vorliegenden Erfindung ist das erste Werkzeug 5 als Drehwerkzeug (Drehmeißel) ausgebildet.

Die Werkzeugmaschine weist weiterhin eine Anzahl von lagegeregelten Antrieben 6 auf.

Mittels eines der Antriebe 6 kann der Werkstücktisch 1 um eine Drehachse 7 gedreht werden. Das Drehen des Werkstücktischs 1 um die Drehachse 7 ist hierbei nicht auf einen bestimmten Winkelbereich begrenzt. Vielmehr ist es möglich, den Werkstücktisch 1 bei entsprechender Ansteuerung des zugehörigen lagegeregelten Antriebs 6 beliebig oft vollständig um die Drehachse 7 zu drehen (rotieren). Mit "vollständig um die Drehachse 7 zu drehen" ist hierbei nicht gemeint, dass der Drehwinkel, um den der Werkstücktisch 1 gedreht wird, gleich einem ganzzahligen Vielfachen einer vollen Umdrehung ist. Vielmehr ist gemeint, dass der Werkstücktisch 1 nicht nur um einen Teil einer vollständigen Umdrehung gedreht wird, sondern über einen erheblich größeren Drehwinkel. Aufgrund der Ausbildung des zugehörigen Antriebs 6 als lagegeregelter Antrieb erfolgt auch das Drehen des Werkstücktischs 1 lagegeregelt. Die Drehbarkeit des Werkstücktischs 1 um die Drehachse 7 ist in FIG 1 durch einen Pfeil A angedeutet.

Soweit nachfolgend die Begriffe "axial", "radial" und "tangential" verwendet werden, sind sie stets auf die Drehachse 7 bezogen. "Axial" ist eine Richtung parallel zur Drehachse 7. "Radial" ist eine Richtung orthogonal zur Drehachse 7 direkt auf die Drehachse 7 zu bzw. von ihr weg. "Tangential" ist eine Richtung, die sowohl orthogonal zur Axialrichtung als auch orthogonal zur Radialrichtung gerichtet ist. "Tangential" ist also eine Richtung, die bei konstanter Axialposition und konstantem radialem Abstand kreisförmig um die Drehachse 7 herum gerichtet ist.

Mittels eines weiteren der lagegeregelten Antriebe 6 ist das erste Werkzeug 5 lagegeregelt axial verfahrbar. Dies ist in FIG 1 durch einen Doppelpfeil B angedeutet. In manchen Ausgestaltungen der vorliegenden Erfindung ist weiterhin das erste Werkzeug 5 lagegeregelt auch radial verfahrbar. Dies ist in FIG 1 durch einen Doppelpfeil C angedeutet. Die radiale Verfahrbarkeit ist jedoch nur in manchen Ausgestaltungen der vorliegenden Erfindung erforderlich. Der Doppelpfeil C ist daher in FIG 1 nur gestrichelt dargestellt.

Der Betrieb der Werkzeugmaschine und damit insbesondere die Ansteuerung der Antriebe 6 erfolgt durch eine Steuereinrichtung 8 der Werkzeugmaschine. Die Steuereinrichtung 8 ist mit einem Computerprogramm 9 programmiert. Das Computerprogramm 9 umfasst Maschinencode 10, der von der Steuereinrichtung 8 unmittelbar abarbeitbar ist. Die Programmierung der Steuereinrichtung 8 mit dem Computerprogramm 9, im Ergebnis also die Abarbeitung des Maschinencodes 10 durch die Steuereinrichtung 8, bewirkt, dass die Steuereinrichtung 8 die Werkzeugmaschine gemäß einem Betriebsverfahren betreibt, das nachstehend näher erläutert wird. Hierbei ist es im Einzelfall möglich, dass einzelne Maßnahmen nicht von der Steuereinrichtung 8 gesteuert werden. Wenn dies der Fall ist, wird jeweils darauf hingewiesen. Erfolgt kein derartiger Hinweis, wird die Maßnahme von der Steuereinrichtung 8 gesteuert.

Im Rahmen des erfindungsgemäßen Betriebsverfahrens wird gemäß FIG 2 zunächst in einem Schritt S1 das erste Werkstück 3 in die erste Werkstückaufnahme 2 eingespannt. Sodann wird in einem Schritt S2 das erste Werkzeug 5 in den ersten Werkzeughalter 4 eingespannt. Die Schritte S1 und S2 können von der Steuereinrichtung 8 gesteuert werden. Es ist jedoch alternativ möglich, diese Schritte S1 und/oder S2 anderweitig vorzunehmen, beispielsweise manuell oder unter Kontrolle einer anderen, in den FIG nicht dargestellten Steuereinrichtung.

Sodann wird in einem Schritt S3 der Werkstücktisch 1 in Umdrehung versetzt, so dass er mit einer bestimmten Drehzahl n um die Drehachse 7 rotiert. Dieses Rotieren wird im Rahmen des Schrittes S4 beibehalten. Möglicherweise wird im Rahmen des Schrittes S4 zwar die Drehzahl n variiert. Das Rotieren des Werkstücktischs 1 als solches wird jedoch beibehalten. Die Anzahl an Umdrehungen des Werkstücktischs 1 ist im Rahmen der vorliegenden Erfindung von untergeordneter Bedeutung. Von Bedeutung kann jedoch sein, während der einzelnen Umdrehungen die jeweilige Drehstellung des Werkstücktischs 1 zu kennen. Da der Antrieb 6, mittels dessen der Werkstücktisch 1 gedreht wird, ein lagegeregelter Antrieb 6 ist, ist dies der Fall.

Im Schritt S4 wird das erste Werkzeug 5 an das erste Werkstück 3 angestellt. Das Anstellen erfolgt entsprechend der Darstellung in FIG 1 auf einer vom Werkstücktisch 1 abgewandten Seite des ersten Werkstücks 3. Das erste Werkstück 3 befindet sich also in Axialrichtung gesehen zwischen dem Werkstücktisch 1 und dem ersten Werkzeug 5. Es erfolgt somit eine sogenannte Stirnflächenbearbeitung des ersten Werkstücks 3. Hierbei ist relevant, die Bearbeitung vollständig axial oder unter einem Winkel zur Drehachse 7 erfolgt.

Das erste Werkzeug 5 bearbeitet das erste Werkstück 1 spanabhebend. Die Art der Bearbeitung ist ein Drehen. Drehen ist ein Bearbeitungsvorgang, bei dem die zur Bearbeitung erforderliche Geschwindigkeit der Schneidkante des Werkzeugs 5 relativ zum ersten Werkstück 3 im Kern durch das Rotieren des Werkstücktischs 1 und damit des ersten Werkstücks 3 bewirkt wird. Diese Geschwindigkeit ist tangential gerichtet. Orthogonal zu dieser Bewegung, also in Axialrichtung und/oder Radialrichtung, erfolgt hingegen nur eine relativ langsame Bewegung des ersten Werkzeugs 5 relativ zum ersten Werkstück 3. Drehen steht somit im Gegensatz zu einem Fräsen, bei dem sich das erste Werkzeug 5 als Ganzes relativ zum ersten Werkstück 3 in allen drei Raumrichtungen nur relativ langsam bewegt und die erforderliche Geschwindigkeit der Schneidkanten des ersten Werkzeugs 5 im Kern durch ein schnelles Rotieren des ersten Werkzeugs 5 um eine Rotationsachse des ersten Werkzeugs 5 bewirkt wird.

Es ist möglich, dass die axiale Positionierung des ersten Werkzeugs 5 relativ zum ersten Werkstück 3 während der Umdrehungen des Werkstücktischs 1 beibehalten oder nur relativ langsam geändert wird. Alternativ ist es möglich, derartige Änderungen relativ schnell vorzunehmen. Der Begriff "schnell" bezieht sich in diesem Zusammenhang nicht auf den Vergleich mit der Geschwindigkeit, mit der das erste Werkstück 3 sich relativ zum ersten Werkzeug 5 bewegt. Bezogen auf diese Geschwindigkeit ist die Änderung der axialen Positionierung des ersten Werkzeugs 5 immer noch langsam. Der Begriff "schnell" bezieht sich vielmehr auf eine einzelne Umdrehung des Werkstücktischs 1. Bei einer langsamen axialen Positionierung ist entweder die Richtung der axialen Positionierung des ersten Werkzeugs 5 - sofern die axiale Positionierung überhaupt geändert wird - während einer einzelnen Umdrehung des Werkstücktischs 1 einheitlich dieselbe oder es erfolgt maximal eine einzige Richtungsumkehr. Bei einer schnellen axialen Positionierung erfolgt während einer einzelnen Umdrehung des Werkstücktischs 1 mehrmals eine Richtungsumkehr.

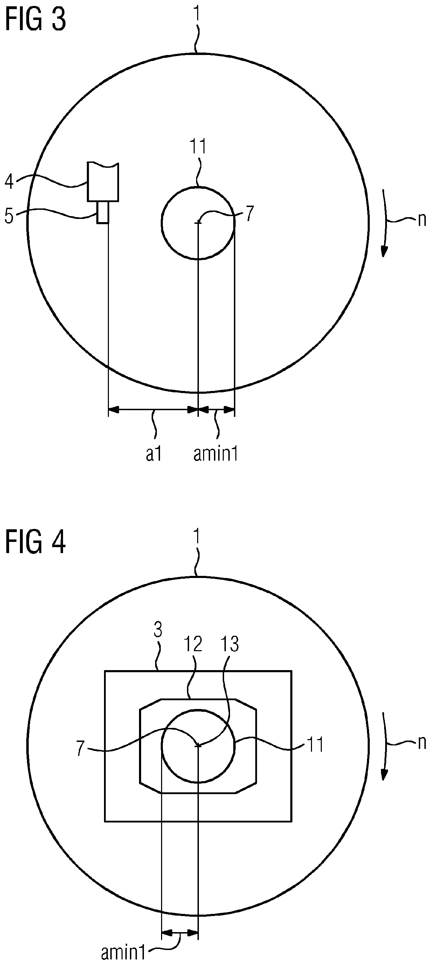

Im Rahmen der vorliegenden Erfindung ist von untergeordneter Bedeutung, welche dieser beiden Vorgehensweisen ergriffen wird. Entscheidend ist hingegen, dass das erste Werkzeug 5 und damit ein erster Einwirkungsbereich, in dem das erste Werkzeug 5 das erste Werkstück 3 bearbeitet, sich entsprechend der Darstellung in FIG 3 während der gesamten spanabhebenden Bearbeitung des ersten Werkstücks 3 durch das erste Werkzeug 5 in einem ersten Abstand a1 von der Drehachse 7 befinden, der stets mindestens so groß wie ein vorbestimmter erster Mindestabstand amin1 ist. Anders ausgedrückt: Ein Kreis, dessen Radius gleich dem vorbestimmten ersten Mindestabstand amin1 ist, stellt eine verbotene Zone 11 dar, innerhalb derer keine Bearbeitung des ersten Werkstücks 3 durch das erste Werkzeug 5 erfolgen darf. Der erste Mindestabstand amin1 ist geeignet gewählt. In jedem Fall ist er größer als 0. Beispielsweise kann er bei 5 mm, 10 mm, 20 mm oder anderen - insbesondere größeren - Werten liegen.

Um diese Bedingung einhalten zu können und dennoch die gewünschte Bearbeitung des ersten Werkstücks 3 vornehmen zu können, sind verschiedene Vorgehensweisen möglich.

In günstigen Fällen ist es möglich, das erste Werkstück 3 in der ersten Werkstückaufnahme 2 im Wesentlichen mittig einzuspannen. Diese Vorgehensweise ist möglich, wenn das erste Werkstück entsprechend der Darstellung in FIG 4 einen ersten Werkstückbereich 12 aufweist, in dem keine Bearbeitung durch das erste Werkzeug 5 erfolgen soll. Wenn der erste Werkstückbereich 12 groß genug ist, ist es in diesem Fall möglich, das erste Werkstück 3 in die erste Werkstückaufnahme 2 derart einzuspannen, dass der erste Werkstückbereich 12 einen Punkt 13 enthält, der sich auf der Drehachse 7 befindet. Dennoch kann es möglich sein, das erste Werkstück 3 mittels des ersten Werkzeugs 5 zu bearbeiten, ohne den ersten Mindestabstand amin1 zu unterschreiten. Insbesondere ist dies möglich, wenn der Punkt 13 von den Rändern des ersten Werkstückbereichs 12 jeweils um mindestens den ersten Mindestabstand amin1 beabstandet ist. In diesem Fall ist die Bearbeitung möglich, obwohl das erste Werkstück 3 während der gesamten Bearbeitung durch das erste Werkzeug 5 unbeweglich stets an derselben Position des Werkstücktischs 1 gehalten wird. Ein Beispiel eines derartigen Werkstücks kann beispielsweise ein flaches oder leicht gewölbtes Gehäuseteil sein, das an einer entsprechenden Stelle eine hinreichend große Ausnehmung aufweist. Ein Beispiel eines derartigen Gehäuseteils ist ein Gehäuseteil eines Mobiltelefons, die zugehörige Ausnehmung die Ausnehmung für eine Kameraoptik des Mobiltelefons. Das technologische Fenster für die Geschwindigkeit, mit der sich das erste Werkstück 3 unter dem ersten Werkzeug 5 hinweg bewegt, kann durch Anpassen der Drehzahl n des Werkstücktischs 1 (genauer: durch Anpassen der Geschwindigkeit, mit welcher der Winkelsollwert des Werkstücktischs 1 geändert wird) an den momentanen Abstand a1 des ersten Werkzeugs 5 von der Drehachse 7 eingehalten werden.

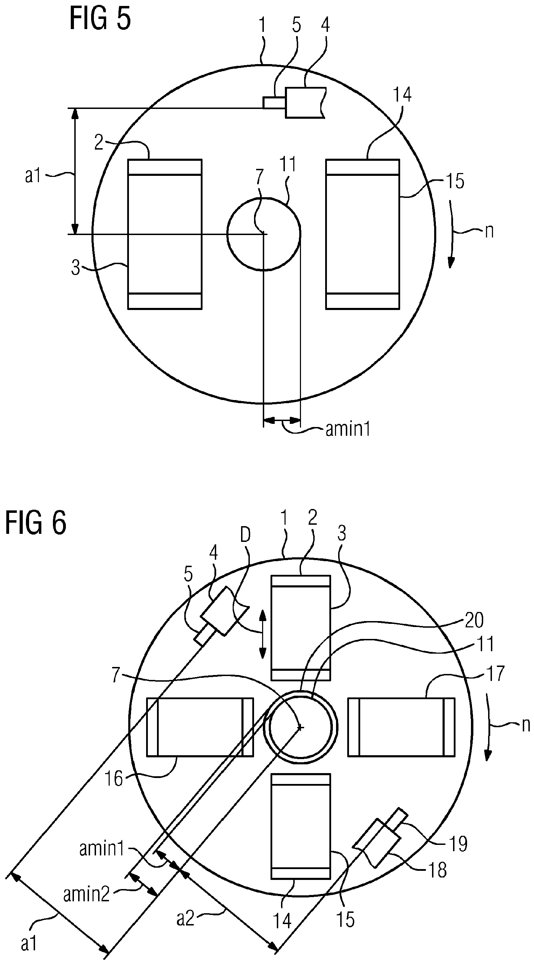

Alternativ ist es entsprechend der Darstellung in den FIG 5 und 6 möglich, dass das erste Werkstück 3 auf dem Werkstücktisch 1 derart angeordnet ist, dass es sich ausschließlich an Orten befindet, die von der Drehachse 7 mindestens um den ersten Mindestabstand amin1 beabstandet sind. Diese Ausgestaltung stellt eine deutlich exzentrische Anordnung des ersten Werkstücks 3 relativ zur Drehachse 7 dar. Diese Ausgestaltung wird daher vorzugsweise - aber nicht zwangsweise - mit einer weiteren Ausgestaltung der vorliegenden Erfindung kombiniert. In dieser weiteren Ausgestaltung ist auf dem Werkstücktisch 1 eine zweite Werkstückaufnahme 14 angeordnet, in die ein zweites Werkstück 15 eingespannt ist. Das Einspannen des zweiten Werkstücks 15 in die zweite Werkstückaufnahme 14 kann - analog zum Einspannen des ersten Werkstücks 3 in die erste Werkstückaufnahme 2 - nach Bedarf von der Steuereinrichtung 8 gesteuert werden oder anderweitig vorgenommen werden. Auch in diesem Fall kann das technologische Fenster für die Geschwindigkeit, mit der sich das erste Werkstück 3 unter dem ersten Werkzeug 5 hinweg bewegt, durch Anpassen der Drehzahl n des Werkstücktischs 1 an den momentanen Abstand a1 des ersten Werkzeugs 5 von der Drehachse 7 eingehalten werden.

Wenn in die zweite Werkstückaufnahme 14 das zweite Werkstück 15 eingespannt ist, wird vorzugsweise das erste Werkzeug 5 auf einer vom Werkstücktisch 1 abgewandten Seite auch an das zweite Werkstück 15 angestellt, so dass das erste Werkzeug 5 auch das zweite Werkstück 15 spanabhebend bearbeitet. Die obigen Ausführungen zur Bearbeitung des ersten Werkstücks 3 durch das erste Werkzeug 5 sind analog anwendbar.

Bei einer entsprechend außermittigen Anordnung des ersten Werkstücks 3 ist es weiterhin möglich, das erste Werkstück 3 während der gesamten spanabhebenden Bearbeitung des ersten Werkstücks 3 durch das erste Werkzeug 5 auf dem Werkstücktisch 1 unbeweglich stets an derselben Position zu halten und dennoch während der gesamten Bearbeitung durch das erste Werkzeug 5 den ersten Mindestabstand amin1 einzuhalten. Analoge Ausführungen gelten für das zweite Werkstück 15.

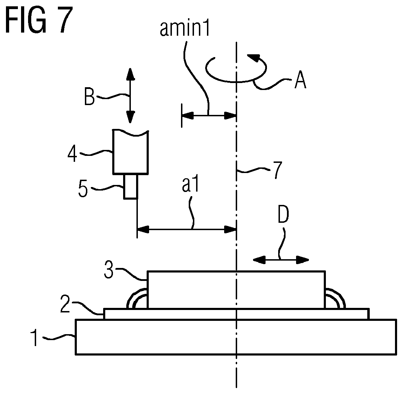

Alternativ oder zusätzlich ist es möglich, dass einer der lagegeregelten Antriebe 6 auf die erste Werkstückaufnahme 2 wirkt. Insbesondere ist es möglich, dass die erste Werkstückaufnahme 2 (und mit ihr selbstverständlich das erste Werkstück 3) während der Bearbeitung durch das erste Werkzeug 5 lagegeregelt verschoben wird. Die Richtung, in welche die Verschiebung erfolgt, weist zumindest eine Komponente orthogonal zur Drehachse 7 auf. Vorzugsweise ist die Richtung entsprechend der Darstellung in den FIG 6 und 7 - siehe dort den Doppelpfeil D - sogar vollständig orthogonal zur Drehachse 7. Durch das Verschieben ist es möglich, Bereiche des ersten Werkstücks 3, die sich beim Einspannen des ersten Werkstücks 3 in die erste Werkstückaufnahme 2 innerhalb der verbotenen Zone 11 befinden, durch entsprechende Ansteuerung des zugehörigen lagegeregelten Antriebs 6 nach radial außen zu verlagern, so dass diese Bereiche sich nach dem Verlagern nach radial außen außerhalb der verbotenen Zone 11 befinden. Analoge Ausführungen gelten wieder für das zweite Werkstück 15. Das radiale Verschieben des zweiten Werkstücks 15 kann mit dem Verschieben des ersten Werkstücks 3 gekoppelt sein. Alternativ kann ein unabhängiges Verschieben des zweiten Werkstücks 15 erfolgen.

Es ist möglich, dass die Möglichkeit der radialen Positionierung des ersten Werkstücks 3 zusätzlich zur Möglichkeit der radialen Positionierung des ersten Werkzeugs 5 realisiert ist. Bei einem hinreichend großen radialen Stellbereich der ersten Werkstückaufnahme 2 ist es jedoch möglich, das erste Werkzeug 5 in Radialrichtung gesehen stets an derselben Position gehalten wird. Dies ist in den FIG 6 und 7 dadurch angedeutet, dass der Doppelpfeil C dort nicht eingezeichnet ist. In diesem Fall kann die Geschwindigkeit, mit der sich das erste Werkstück 3 unter dem ersten Werkzeug 5 hinweg bewegt, durch Anpassen der Drehzahl n des Werkstücktischs 1 an den dann konstanten Abstand a1 des ersten Werkzeugs 5 von der Drehachse 7 eingehalten werden.

Nach der Bearbeitung des ersten Werkstücks 3 (und gegebenenfalls des zweiten Werkstücks 15 sowie gegebenenfalls auch weiterer Werkstücke 16, 17) wird in einem Schritt S5 das Rotieren des Werkstücktischs 1 beendet (n = 0). Sodann werden in einem Schritt S6 die Werkstücke 3, 15 usw. aus ihren Werkstückaufnahmen 2, 14 usw. entfernt. Analog zum Einspannen der Werkstücke 3, 15 in die Werkstückaufnahmen 2, 14 kann der Schritt S6 nach Bedarf von der Steuereinrichtung 8 gesteuert werden oder anderweitig vorgenommen werden.

Es ist möglich und in der Regel vorzuziehen, wenn das erste und das zweite Werkstück 3, 15 (und gegebenenfalls auch weitere Werkstücke 16, 17) gleichartig zueinander sind und durch das erste Werkzeug 5 in gleichartiger Weise bearbeitet werden. Diese Vorgehensweise ermöglicht es in manchen Fällen insbesondere, die axiale Positionierung des ersten Werkzeugs 5 langsam vorzunehmen. Wenn eine schnelle axiale Positionierung des ersten Werkzeugs 5 möglich ist, ist es alternativ jedoch ebenso möglich, dass das erste und das zweite Werkstück 3, 15 (und gegebenenfalls auch weitere Werkstücke 16, 17) durch das erste Werkzeug 5 in voneinander verschiedener Weise bearbeitet werden oder beispielsweise auch in das erste und das zweite Werkstück 3, 15 (und gegebenenfalls auch weitere Werkstücke 16, 17) eine Kontur eingebracht wird.

Gemäß FIG 6 kann die Werkzeugmaschine weiterhin zusätzlich zum ersten Werkzeughalter 4 einen zweiten Werkzeughalter 18 aufweisen. In diesem Fall kann entsprechend der Darstellung in FIG 6 in den zweiten Werkzeughalter 18 ein zweites Werkzeug 19 eingespannt sein. Das Einspannen des zweiten Werkzeugs 19 in dem zweiten Werkzeughalter 18 kann analog zum Einspannen des ersten Werkzeugs 5 in den ersten Werkzeughalter 4 nach Bedarf von der Steuereinrichtung 8 gesteuert werden oder anderweitig vorgenommen werden. In diesem Fall ist das zweite Werkzeug 19 - analog zum ersten Werkzeug 5 - lagegeregelt zumindest axial verfahrbar. Gegebenenfalls kann es zusätzlich radial verfahrbar sein.

Das zweite Werkzeug 19 ist analog zum ersten Werkzeug 5 ein Drehwerkzeug. In diesem Fall wird im Schritt S4 auch das zweite Werkzeug 19 auf der vom Werkstücktisch 1 abgewandten Seite an das erste Werkstück 3 angestellt, so dass das zweite Werkzeug 19 ebenfalls das erste Werkstück 3 spanabhebend bearbeitet. Auch diese Bearbeitung ist eine Drehbearbeitung einer Stirnfläche des ersten Werkstücks 3. Analoge Ausführungen gelten - sofern vorhanden - für das zweite Werkstück 15 und gegebenenfalls auch für die weiteren Werkstücke 16, 17.

Das zweite Werkzeug 19 befindet sich während der gesamten spanabhebenden Bearbeitung des ersten Werkstücks 3 in einem zweiten Abstand a2 von der Drehachse 7, der stets mindestens so groß wie ein vorbestimmter zweiter Mindestabstand amin2 ist. Anders ausgedrückt: Ein Kreis, dessen Radius gleich dem vorbestimmten zweiten Mindestabstand amin2 ist, stellt eine verbotene Zone 20 dar, innerhalb derer keine Bearbeitung des ersten Werkstücks 3 durch das zweite Werkzeug 19 erfolgen darf. Analoge Ausführungen gelten - sofern vorhanden - wieder für das zweite Werkstück 15 und gegebenenfalls auch für die weiteren Werkstücke 16, 17.

Der zweite Mindestabstand amin2 ist geeignet gewählt. In jedem Fall ist er größer als 0. Beispielsweise kann er bei 5 mm, 10 mm, 20 mm oder anderen - insbesondere größeren - Werten liegen. Der zweite Mindestabstand amin2 kann insbesondere gleich den gleichen Wert wie der erste Mindestabstand amin1 aufweisen.

Es ist möglich, dass das erste und das zweite Werkzeug 5, 19 gleichartige Bearbeitungen des ersten Werkstücks 3 (und, soweit vorhanden, auch des zweiten Werkstücks 15 und gegebenenfalls auch der weiteren Werkstücke 16, 17) vornehmen. Alternativ können sie voneinander verschiedene Bearbeitungen vornehmen. Beispielsweise kann das erste Werkzeug 5 eine Grobbearbeitung vornehmen, das zweite Werkzeug 19 eine auf die Grobbearbeitung folgende Feinbearbeitung.

Zusammengefasst betrifft die vorliegende Erfindung somit folgenden Sachverhalt:
Eine Werkzeugmaschine weist zumindest einen Werkstücktisch 1, eine auf dem Werkstücktisch 1 angeordnete erste Werkstückaufnahme 2 und ein erstes Werkzeug 5 auf. Der Werkstücktisch 1 ist lagegeregelt um eine Drehachse 7 drehbar, da erste Werkzeug 5 lagegeregelt zumindest parallel zur Drehachse 7 verfahrbar. In die erste Werkstückaufnahme 2 wird ein erstes Werkstück 3 eingespannt. Der Werkstücktisch 1 wird über eine Vielzahl von vollständigen Umdrehungen um die Drehachse 7 gedreht. Während des Drehens des Werkstücktischs 1 um die Drehachse 7 wird das erste Werkzeug 5 zumindest temporär auf einer vom Werkstücktisch 1 im wesentlichen abgewandten Seite an das erste Werkstück 3 angestellt, so dass das erste Werkzeug 5 das erste Werkstück 3 spanabhebend bearbeitet. Während der gesamten spanabhebenden Bearbeitung des ersten Werkstücks 3 befindet sich das erste Werkzeug 5 in einem ersten Abstand a1 von der Drehachse 7, der stets mindestens so groß wie ein vorbestimmter erster Mindestabstand amin1 ist.

Die vorliegende Erfindung weist viele Vorteile auf. Zum einen wird die Produktivität gesteigert. Weiterhin ist auf einfache Weise der technologische Arbeitspunkt optimal einstellbar. Im Falle einer gleichartigen Bearbeitung mehrerer Werkstücke 3, 15, 16, 17 ist es weiterhin möglich, im Rahmen eines Programms, dass die Bearbeitung der Werkstücke 3, 15, 16, 17 festlegt, nur die Bearbeitung für das erste Werkstück 3 explizit zu programmieren. Die Steuerbefehle für die Bearbeitung des zweiten Werkstücks 15 sowie gegebenenfalls der weiteren Werkstücke 16, 17 können automatisch von der Steuereinrichtung 8 generiert werden. Sofern unterschiedliche Bearbeitungen gewünscht sind, müssen diese jedoch - sei es innerhalb eines einzigen Programms, sei es innerhalb mehrerer Programme - separat vorliegen. Es ist auch möglich, dass ein Bediener der Steuereinrichtung 8 bzw. der Werkzeugmaschine einzeln vorgibt, welche Werkstücke 3, 15, 16, 17 bearbeitet werden sollen. Ähnliches gilt für die Bearbeitung der Werkstücke 3, 15, 16, 17 durch mehrere Werkzeuge 5, 19.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Werkzeugmaschine,
- wobei die Werkzeugmaschine zumindest einen Werkstücktisch (1), eine auf dem Werkstücktisch (1) angeordnete erste Werkstückaufnahme (2) und ein erstes Werkzeug (5) aufweist,
- wobei der Werkstücktisch (1) lagegeregelt um eine Drehachse (7) drehbar ist und das erste Werkzeug (5) lagegeregelt zumindest parallel zur Drehachse (7) verfahrbar ist,
- wobei in die erste Werkstückaufnahme (2) ein erstes Werkstück (3) eingespannt wird,
- wobei der Werkstücktisch (1) über eine Vielzahl von vollständigen Umdrehungen um die Drehachse (7) gedreht wird,
- wobei während des Drehens des Werkstücktischs (1) um die Drehachse (7) das erste Werkzeug (5) zumindest temporär auf einer vom Werkstücktisch (1) im wesentlichen abgewandten Seite an das erste Werkstück (3) angestellt wird, so dass das erste Werkzeug (5) das erste Werkstück (3) spanabhebend bearbeitet,
**dadurch gekennzeichnet,**
**dass** das erste Werkzeug (5) sich während der gesamten spanabhebenden Bearbeitung des ersten Werkstücks (3) durch das erste Werkzeug (5) in einem ersten Abstand (a1) von der Drehachse (7) befindet, der stets mindestens so groß wie ein vorbestimmter erster Mindestabstand (amin1) ist.

2. Betriebsverfahren nach Anspruch 1,
**dadurch gekennzeichnet,**
**dass** das erste Werkstück (3) einen Werkstückbereich (12) aufweist, in dem keine Bearbeitung durch das erste Werkzeug (5) erfolgen soll, dass das erste Werkstück (3) in der ersten Werkstückaufnahme (2) derart eingespannt ist, dass der Werkstückbereich (12) einen Punkt (13) enthält, der sich auf der Drehachse (7) befindet, und dass das erste Werkstück (3) während der gesamten spanabhebenden Bearbeitung des ersten Werkstücks (3) durch das erste Werkzeug (5) auf dem Werkstücktisch (1) unbeweglich stets an derselben Position gehalten wird.

3. Betriebsverfahren nach Anspruch 1,
**dadurch gekennzeichnet,**
**dass** das erste Werkstück (3) auf dem Werkstücktisch (1) derart angeordnet ist, dass es sich ausschließlich an Orten befindet, die von der Drehachse (7) mindestens um den ersten Mindestabstand (amin1) beabstandet sind, und dass das erste Werkstück (3) während der gesamten spanabhebenden Bearbeitung des ersten Werkstücks (3) durch das erste Werkzeug (5) auf dem Werkstücktisch (1) unbeweglich stets an derselben Position gehalten wird.

4. Betriebsverfahren nach Anspruch 1, 2 oder 3,
**dadurch gekennzeichnet,**
**dass** die erste Werkstückaufnahme (2) auf dem Werkstücktisch (1) während der spanabhebenden Bearbeitung des ersten Werkstücks (3) durch das erste Werkzeug (5) lagegeregelt verschoben wird und dass eine Richtung, in welcher die Verschiebung erfolgt, eine Komponente orthogonal zur Drehachse (7) aufweist.

5. Betriebsverfahren nach Anspruch 4,
**dadurch gekennzeichnet,**
**dass** das erste Werkzeug (5) während der gesamten spanabhebenden Bearbeitung des ersten Werkstücks (3) durch das erste Werkzeug (5) orthogonal zur Drehachse (7) gesehen stets an derselben Position gehalten wird.

6. Betriebsverfahren nach einem der obigen Ansprüche,
**dadurch gekennzeichnet,**
- **dass** zusätzlich ein zweites Werkstück (15) in eine auf dem Werkstücktisch (1) angeordnete zweite Werkstückaufnahme (14) eingespannt wird und
- **dass** das erste Werkzeug (5) während des Drehens des Werkstücktischs (1) um die Drehachse (7) zumindest temporär auf einer vom Werkstücktisch (1) im wesentlichen abgewandten Seite auch an das zweite Werkstück (15) angestellt wird, so dass das erste Werkzeug (5) auch das zweite Werkstück (15) spanabhebend bearbeitet.

7. Betriebsverfahren nach Anspruch 6,
**dadurch gekennzeichnet,**
**dass** das erste und das zweite Werkstück (3, 15) gleichartig zueinander sind und durch das erste Werkzeug (5) in gleichartiger Weise bearbeitet werden.

8. Betriebsverfahren nach Anspruch 6,
**dadurch gekennzeichnet,**
**dass** das erste und das zweite Werkstück (3, 15) durch das erste Werkzeug (5) in voneinander verschiedener Weise bearbeitet werden.

9. Betriebsverfahren nach einem der obigen Ansprüche,
**dadurch gekennzeichnet,**
- **dass** die Werkzeugmaschine zusätzlich ein zweites Werkzeug (19) aufweist,
- **dass** das zweite Werkzeug (19) lagegeregelt zumindest parallel zur der Drehachse (7) verfahrbar ist,
- **dass** während des Drehens des Werkstücktischs (1) um die Drehachse (7) das zweite Werkzeug (19) zumindest temporär auf der vom Werkstücktisch (1) im wesentlichen abgewandten Seite an das erste Werkstück (3) angestellt wird, so dass das zweite Werkzeug (19) das erste Werkstück (3) spanabhebend bearbeitet, und
- **dass** das zweite Werkzeug (19) sich während der gesamten spanabhebenden Bearbeitung des ersten Werkstücks (3) durch das zweite Werkzeug (19) in einem zweiten Abstand (a2) von der Drehachse (7) befindet, der stets mindestens so groß wie ein vorbestimmter zweiter Mindestabstand (amin2) ist.

10. Betriebsverfahren nach Anspruch 9,
**dadurch gekennzeichnet,**
**dass** das erste und das zweite Werkzeug (5, 19) gleichartige oder voneinander verschiedene Bearbeitungen des ersten Werkstücks (3) vornehmen.

11. Computerprogramm, das Maschinencode (10) umfasst, der von einer Steuereinrichtung (8) einer Werkzeugmaschine unmittelbar abarbeitbar ist, wobei die Abarbeitung des Maschinencodes (10) durch die Steuereinrichtung (8) bewirkt, dass die Steuereinrichtung (8) eine Werkzeugmaschine, die zumindest einen lagegeregelt um eine Drehachse (7) drehbaren Werkstücktisch (1), eine auf dem Werkstücktisch (1) angeordnete erste Werkstückaufnahme (2) und ein lagegeregelt zumindest parallel zur Drehachse (7) verfahrbares erstes Werkzeug (5) aufweist, derart betreibt,
- dass der Werkstücktisch (1) über eine Vielzahl von vollständigen Umdrehungen um die Drehachse (7) gedreht wird und
- dass während des Drehens des Werkstücktischs (1) um die Drehachse (7) das erste Werkzeug (5) zumindest temporär auf einer vom Werkstücktisch (1) im wesentlichen abgewandten Seite an ein in die erste Werkstückaufnahme (2) eingespanntes erstes Werkstück (3) angestellt wird, so dass das erste Werkzeug (5) das erste Werkstück (3) spanabhebend bearbeitet,
**dadurch gekennzeichnet,**
**dass** die Abarbeitung des Maschinencodes (10) durch die Steuereinrichtung (8) bewirkt, dass die Steuereinrichtung (8) die Werkzeugmaschine derart betreibt, dass das erste Werkzeug (5) sich während der gesamten spanabhebenden Bearbeitung des ersten Werkstücks (3) durch das erste Werkzeug (5) in einem ersten Abstand (a1) von der Drehachse (7) befindet, der stets mindestens so groß wie ein vorbestimmter erster Mindestabstand (amin1) ist.

12. Computerprogramm nach Anspruch 11,
**dadurch gekennzeichnet,**
**dass** die Abarbeitung des Maschinencodes (10) durch die Steuereinrichtung (8) bewirkt, dass die Steuereinrichtung (8) die Werkzeugmaschine derart betreibt, dass
- während der spanabhebenden Bearbeitung des ersten Werkstücks (3) durch das erste Werkzeug (5) das erste Werkstück (3) auf dem Werkstücktisch (1) unbeweglich stets an derselben Position gehalten wird oder die erste Werkstückaufnahme (2) auf dem Werkstücktisch (1) lagegeregelt orthogonal zur Drehachse (7) verschoben wird,
- während der spanabhebenden Bearbeitung des ersten Werkstücks (3) durch das erste Werkzeug (5) das erste Werkzeug (5) orthogonal zur Drehachse gesehen stets an derselben Position gehalten wird oder das erste Werkzeug (5) lagegeregelt orthogonal zur Drehachse (7) verfahren wird,
- während des Drehens des Werkstücktischs (1) um die Drehachse (7) das erste Werkzeug (5) zumindest temporär auf einer vom Werkstücktisch (1) im wesentlichen abgewandten Seite auch an ein in eine auf dem Werkstücktisch (1) angeordnete zweite Werkstückaufnahme (14) eingespanntes zweites Werkstück (15) angestellt wird, so dass das erste Werkzeug (5) auch das zweite Werkstück (15) spanabhebend bearbeitet, und/oder
- während des Drehens des Werkstücktischs (1) um die Drehachse (7) ein lagegeregelt parallel zur Drehachse (7) verfahrbares zweites Werkzeug (19) zumindest temporär auf der vom Werkstücktisch (1) im wesentlichen abgewandten Seite an das erste Werkstück (3) angestellt wird, so dass das zweite Werkzeug (19) das erste Werkstück (3) spanabhebend bearbeitet, wobei das zweite Werkzeug (19) sich während der gesamten spanabhebenden Bearbeitung des ersten Werkstücks (3) durch das zweite Werkzeug (19) in einem zweiten Abstand (a2) von der Drehachse (7) befindet, der stets mindestens so groß wie ein vorbestimmter zweiter Mindestabstand (amin2) ist.

13. Steuereinrichtung einer Werkzeugmaschine, wobei die Steuereinrichtung mit einem Computerprogramm (9) nach Anspruch 11 oder 12 programmiert ist, so dass sie die Werkzeugmaschine entsprechend den in Anspruch 11 oder 12 angegebenen Maßnahmen betreibt.

14. Werkzeugmaschine,
- wobei die Werkzeugmaschine zumindest einen Werkstücktisch (1), eine auf dem Werkstücktisch (1) angeordnete erste Werkstückaufnahme (2) und ein erstes Werkzeug (5) aufweist,
- wobei der Werkstücktisch (1) lagegeregelt über eine Vielzahl von vollständigen Umdrehungen um eine Drehachse (7) drehbar ist und das erste Werkzeug (5) lagegeregelt zumindest parallel zur der Drehachse (7) verfahrbar ist,
- wobei die Werkzeugmaschine eine Steuereinrichtung (8) nach Anspruch 13 aufweist.
